Europäisches Patentamt

European Patent Office

Office européen des brevets

(11) Veröffentlichungsnummer: **0 498 146 A2**

(12) **EUROPÄISCHE PATENTANMELDUNG**

(21) Anmeldenummer: **92100036.0**

(22) Anmeldetag: **03.01.92**

(51) Int. Cl.⁵: **F16L 39/04**

(30) Priorität: **05.02.91 DE 4103376**

(43) Veröffentlichungstag der Anmeldung:
**12.08.92 Patentblatt 92/33**

(84) Benannte Vertragsstaaten:
**AT CH ES FR GB IT LI SE**

(71) Anmelder: **Ott Maschinentechnik GmbH**
**Jägerstrasse 4-12**
**W-8960 Kempten(DE)**

(72) Erfinder: **Jung, Liebhard**
**Badeseestrasse 15**
**W-8964 Nesselwang(DE)**
Erfinder: **Heel, Helmut**
**Andreas-Mayer-Strasse 82 1/8**
**W-8951 Lengenwang(DE)**

(74) Vertreter: **Liebau, Gerhard, Dipl.-Ing.**
**Birkenstrasse 39 Postfach 22 02 29**
**W-8900 Augsburg 22(DE)**

(54) **Drehdurchführung für zwei unterschiedliche Fluide.**

(57) Die Drehdurchführung für zwei unterschiedliche Fluide weist ein feststehendes Gehäuse (1) und eine darin drehbar und axial unverschiebbar gelagerte Hohlwelle (2) auf, die mit einem zentralen Durchflußkanal (5) für das erste Fluid und mindestens einem hierzu parallelen zweiten Durchflußkanal (6) für das zweite Fluid versehen ist. Im Gehäuse (1) sind zwei getrennte Zuflußkanäle (9, 26) für die beiden Fluide und zwei zwischen diesen und der Hohlwelle (1) koaxial zur Drehachse angeordneten Gleitringdichtungsanordnungen (7a, 7b, 8; 10a, 10b, 11) vorgesehen, über welche die Fluide den Durchgangskanälen getrennt zuführbar sind. Hierbei ist die erste Gleitringdichtungsanordnung (7a, 7b, 8) zentral zwischen dem inneren Ende (2a) der Hohlwelle (2) und einem den ersten Zuflußkanal (9) aufweisenden Gehäuseteil (1a) angeordnet, während die zweite Gleitringdichtungsanordnung (10a, 10b, 11) die Hohlwelle konzentrisch umschließt und einen zusammen mit der Hohlwelle (2) drehbaren, mit mindestens einem radialen Durchlaß (27) versehenen Gleitring (10a), sowie zwei an dessen beiden Stirnseiten unter Federdruck ständig anliegende, gegenüber dem Gehäuse (1) ruhende Gleitringe (10b) umfaßt. Die zweite Gleitringdichtungsanordnung (10a, 10b, 11) ist gegenüber dem Gehäuse (1) und der Hohlwelle (2) axial verschiebbar. Der drehbare Gleitring (10a) ist drehfest auf einer die Hohlwelle (2) konzentrisch umgebenden, mit dieser kuppelbaren und axial verschiebbaren inneren Büchse (12) angeordnet. Die beiden ruhenden Gleitringe (10b) sind in einer, die innere Büchse (12) konzentrisch umgebenden, axial verschiebbaren äußeren Büchse (16) angeordnet, die einen in einem Zylinderraum (18) des Gehäuses (1) verschiebbaren Ringkolben (17) aufweist.

EP 0 498 146 A2

Die Erfindung betrifft eine Drehdurchführung für zwei unterschiedliche Fluide, insbesondere für Werkzeugmaschinen, mit einem feststehenden Gehäuse, mit einer darin drehbar und axial unverschiebbar gelagerten, einen zentralen Durchflußkanal für das erste Fluid und mindestens einen hierzu parallelen zweiten Durchflußkanal für das zweite Fluid aufweisenden Hohlwelle, mit zwei im Gehäuse vorgesehenen, getrennten Zuflußkanälen für die beiden Fluide und mit zwei zwischen diesen und der Hohlwelle vorgesehenen, koaxial zur Drehachse angeordneten Gleitringdichtungsanordnungen, über welche die Fluide den Durchflußkanälen getrennt zuführbar sind, wobei die erste Gleitringdichtungsanordnung zentral zwischen dem im Gehäuse liegenden (inneren) Ende der Hohlwelle und einem den ersten Zuflußkanal aufweisenden Gehäuseteil (Gehäusedeckel) angeordnet ist, während die zweite Gleitringdichtungsanordnung die Hohlwelle konzentrisch umschließt und einen zusammen mit der Hohlwelle drehbaren, mit mindestens einem radialen Durchlaß versehenen Gleitring, sowie zwei an dessen beiden Stirnseiten unter Federdruck ständig anliegende, gegenüber dem Gehäuse ruhende Gleitringe umfaßt, und wobei die Hohlwelle mindestens eine Radialbohrung aufweist, die einen der Durchflußkanäle mit dem drehbaren Gleitring verbindet.

Bei Werkzeugmaschinenspindeln ist häufig im Innern der hohlen Werkzeugmaschinenspindel eine Spanneinrichtung (Werkzeugspanner) vorgesehen. Diese Spanneinrichtung weist eine koaxial zur Spindelachse verlaufende Zugstange auf, deren vorderes Ende im Bereich der Werkzeugaufnahme mit einer am Werkzeug angreifenden Spannzange versehen ist. Das innere Ende der Zugstange ist durch eine hydraulisch arbeitende, sogenannte Löseeinheit hindurchgeführt, die zur Betätigung der Spanneinrichtung dient. Über den ersten Zuflußkanal, die erste Gleitringdichtungsanordnung und den parallelen zweiten Durchflußkanal kann während des Stillstandes der Werkzeugmaschinenspindel der Löseeinheit Hydrauliköl unter hohem Druck zugeführt werden, wodurch die Löseeinheit die Zugstange in der Werkzeugmaschinenspindel verschiebt und die Spannzange das Werkstück freigibt. Damit dem drehenden Werkzeug ein Kühlschmiermittel zugeführt werden kann, ist die Zugstange hohl ausgebildet und ihr aus der Löseeinheit herausragendes Ende steht mit dem zantralen Durchflußkanal der Hohlwelle in Verbindung. Die Drehdurchführung erlaubt über den zweiten Zuflußkanal und die zweite Gleitringdichtungsanordnung die Zuführung des Kühlschmiermittels von dem stillstehenden Gehäuse zu der rotierenden Zugstange. Beim Werkzeugwechsel, d.h. bei Stillstand der Werkzeugmaschinenspindel, kann anstelle von Kühlschmiermittel Luft zum Ausblasen der Werkzeugaufnahme durch die Drehdurchführung und die Zugstange geleitet werden.

Drehdurchführungen für zwei unterschiedliche Fluide sind in den verschiedensten Ausführungen und für die verschiedensten Zwecke bekannt. Eine Drehdurchführung der eingangs beschriebenen Art (interner Stand der Technik) ist zwar für die Naßbearbeitung geeignet, bei der dem rotierenden Werkzeug ständig Kühlschmiermittel zugeführt wird, es ergeben sich jedoch erhebliche Probleme bei der Trockenbearbeitung. Da bei Trockenlauf die Gleitringe der zweiten Gleitringdichtungsanordnung infolge fehlender Schmierung und fehlender Kühlung bei höheren Spindeldrehzahlen rasch zerstört werden würden, muß der zweiten Gleitringdichtungsanordnung auch bei Trockenbearbeitung Kühlschmiermittel zugeführt werden. Damit dieses Kühlschmiermittel während der Trockenbearbeitung nicht zum Werkzeug gelangt, ist in der Zugstange oder der Hohlwelle ein federbelastetes Sperrventil eingebaut, welches während der Trockenbearbeitung bei der der Drehdurchführung das Kühlschmiermittel unter geringem Druck zugeführt wird, den Durchflußkanal in der Hohlwelle bzw. der hohlen Zugstange absperrt. Dieses Rückschlagventil gibt jedoch zu weiteren Problemen Anlaß, denn es behindert u.a. den Durchfluß des Kühlschmiermittels während der Naßbearbeitung. Weiterhin werden die Gleitringe der zweiten Gleitringdichtungsanordnung auch bei Verwendung eines Rückschlagventiles nur ungenügend gekühlt, denn es ist keine Zwangsumwälzung des Kühlschmiermittels vorgesehen. Aus diesem Grund ist die bekannte Drehdurchführung nicht für höhere Spindeldrehzahlen geeignet und es ergibt sich bei Trockenbearbeitung infolge der ungenügenden Kühlung der Gleitringe ein erhöhter Verschleiß desselben. Wenn sich Naß- und Trockenbearbeitung miteinander abwechseln, dann ist das Ausblasen des Kühlschmiermittels aus der Drehdurchführung und der Zugstange bei jedem Werkzeugwechsel äußerst störend. Die trocken zu haltenden Werkstücke oder Meßwerkzeuge werden nämlich dabei mit Kühlschmiermittel benetzt. Außerdem wird der Bedienungsmann durch Flüssigkeitsnebel belästigt. Hierbei ist zu berücksichtigen, daß auch bei fortlaufender Trockenbearbeitung nach jedem Werkzeugwechsel und jedem Ausblasen der zweiten Gleitringdichtungsanordnung erneut Kühlschmiermittel zugeführt werden muß.

Es sind auch Drehdurchführungen bekannt (DE 35 42 014 C1), bei denen bei Trockenbearbeitung ein Gleitring der Gleitringdichtungsanordnung von dem anderen Gleitring abgehoben werden kann. Bei Gleitringdichtungen weisen die Dichtflächen eine große Ebenheit auf und sind sehr hart. Es läßt sich nicht vermeiden, daß im Kühlschmiermittel kleine Feststoffpartikel enthalten sind. Geraten bei abgehobenen Gleitringen Feststoffpartikel zwischen die Dichtflächen und werden anschließend die Gleitringe wieder aufeinandergedrückt, dann führen die Feststoffpartikel zu einer raschen Zerstörung der Gleitringdichtung. Außerdem kann sich bei längerem Trockenlauf auch ein Belag an den Gleitringen bilden, der dann später, wenn die Gleitringe wieder aufeinandergedrückt werden, zu einer erhöhten Leckage führt.

Schließlich ist aus der DE 31 20 115 C2 eine Drehdurchführung zum Überleiten eines zeitlich nur intermittierend anstehenden Strömungsmittels von einem stationären auf ein rotierendes Bauteil bekannt. Zur Vermeidung von übermäßigem Verschleiß werden dort die Dichtringe nur dann wirksam, wenn sie tatsächlich erforderlich sind und eine Strömungsmittelüberleitung erfolgen soll. Dies wird dort dadurch erreicht, daß ein dichtendes Anlegen der Dichtringe, die an einer rotierenden Hohlwelle angeordnet sind, an zugehörige Gegenflächen des stillstehenden Gehäuses nur bei Strömungsmittelübertragung erfolgen kann. Um dies zu erreichen, sind in dem Gehäuse den Dichtringen jeweils eine zylindrische Gegenfläche und eine zur Gegenfläche hin geneigte Konusfläche zugeordnet und die Hohlwelle ist gegenüber dem Gehäuse derart axial verschieblich, daß die Dichtringe aus einer zur Konusfläche berührungsfreien Lage über die jeweils zugehörige Konusfläche in den Bereich der jeweils zugehörigen Gegenfläche bringbar sind, wobei sie radial gegen die Gegenfläche angedrückt werden. Diese Ausgestaltung setzt jedoch Dichtringe aus gummielastischem Material voraus. Da bei Strömungsmittelzufuhr die Dichtringe reibend an den zylindrischen Gegenflächen des Gehäuses anliegen, ergibt sich bei hohen Drehzahlen ein erheblicher Verschleiß und außerdem sind derartige radial angedrückte Dichtringe aus gummielastischem Material im Gegensatz zu axial angedrückten Gleitringen auch nur für verhältnismäßig geringe Drücke geeignet.

Der Erfindung liegt daher die Aufgabe zugrunde, eine Drehdurchführung für zwei unterschiedliche Fluide, insbesondere für Werkzeugmaschinenspindeln, der eingangs erwähnten Art zu schaffen, auch bei hohen Drehzahlen eine Trockenbearbeitung ohne Verschleiß der Gleitringe der zweiten Gleitringdichtungsanordnung ermöglicht und bei der der Durchfluß durch den zentralen Durchflußkanal unbehindert erfolgen kann.

Dies wird nach der Erfindung dadurch erreicht, daß die zweite Gleitringdichtungsanordnung gegenüber dem Gehäuse und der Hohlwelle axial verschiebbar ist, daß hierbei der drehbare Gleitring drehfest mit einer die Hohlwelle konzentrisch umgebenden, mit dieser kuppelbaren und axial verschiebbaren inneren Büchse angeordnet ist, daß die beiden ruhenden Gleitringe in einer die innere Büchse konzentrisch umgebenden, axial verschiebbaren äußeren Büchse angeordnet sind, die einen in einem Zylinderraum des Gehäuses verschiebbaren Ringkolben aufweist, und daß die Hohlwelle im Verschiebebereich der inneren Büchse drei zum Hohlwellenende hin im Durchmesser stufenweise verjüngte Abschnitte und die Innenwand der inneren Büchse drei im Durchmesser entsprechend stufenweise verjüngte Abschnitte aufweisen, und daß die innere Büchse am Anfang des zweiten und des dritten Abschnittes O-Ringe aufweist, die nur in gekuppeltem Zustand der inneren Büchse an den im Durchmesser entsprechenden Abschnitten der Hohlwelle anliegen und zwischen sich einen Ringraum abdichten, der mit der Radialbohrung der Hohlwelle in Verbindung steht.

Die Erfindung geht also von dem Gedanken aus, die zweite Gleitringdichtungsanordnung in gemeinsam verschiebbaren Büchsen anzuordnen, um die zweite Gleitringdichtungsanordnung bei Trockenlauf, d.h. wenn kein Fluid über die zweite Gleitringdichtungsanordnung geleitet werden soll, durch axiale Verschiebung von der Hohlwelle abzukuppeln. Während bei Trockenbearbeitung die Werkzeugmaschinenspindel zusammen mit der Hohlwelle rotiert, ruht die abgekuppelte zweite Gleitringdichtungsanordnung. Infolgedessen tritt an den Gleitringen der zweiten Gleitringdichtungsanordnung keine Reibung, kein Verschleiß und keine Erwärmung auf, so daß die zweite Gleitringdichtungsanordnung bei Trockenlauf auch nicht gekühlt zu werden braucht. Infolgedessen kann auch ein Rückschlagventil in der Hohlwelle oder der Zugstange entfallen und es ist ein ungehinderter Durchfluß von Kühlschmiermittel bei Naßbearbeitung gewährleistet. Infolge der besonderen Ausgestaltung der Hohlwelle mit drei stufenweise verjüngten Abschnitten stehen bei Trockenlauf die O-Ringe nicht in Kontakt mit der Hohlwelle, so daß auch an den O-Ringen kein Verschleiß oder keine Erwärmung auftreten kann. Soll bei Naßbearbeitung dem Werkzeug Kühlschmiermittel zugeführt werden, dann wird die äußere Büchse durch ihren Ringkolben hydraulisch oder pneumatisch gegenüber der Hohlwelle verschoben. Sie nimmt hierbei die innere Büchse mit, wodurch diese einerseits an die Hohlwelle drehfest angekuppelt wird und andererseits über die O-Ringe die innere Büchse auch gegenüber der Hohlwelle abgedichtet wird. Bei Naßbearbeitung rotiert die an die Hohlwelle angekuppelte innere Büchse zusammen mit der Hohlwelle, so daß keine Relativbewegung zwischen den O-Ringen und der Hohlwelle stattfindet und damit auch bei Naßbearbeitung ein Verschleiß der O-Ringe vermieden wird. Da bei Trockenlauf die zweite Gleitringdichtungsanordnung völlig von der Hohlwelle abgekuppelt ist, ist die neue Drehdurchführung auch für hohe Drehzahlen geeignet. Die erste Drehdurchführung bereitet nämlich keine Probleme, da hier durch ständige Zuführung eines Fluids eine Kühlung und Schmierung der Gleitringe sichergestellt ist und da infolge der zentralen Anordnung der Gleitringe diese einen verhältnismäßig kleinen Durchmesser aufweisen und dementsprechend die Gleitgeschwindigkeiten verhältnismäßig gering sind.

Vorteilhafte Ausgestaltungen der Erfindung sind in den Unteransprüchen gekennzeichnet.

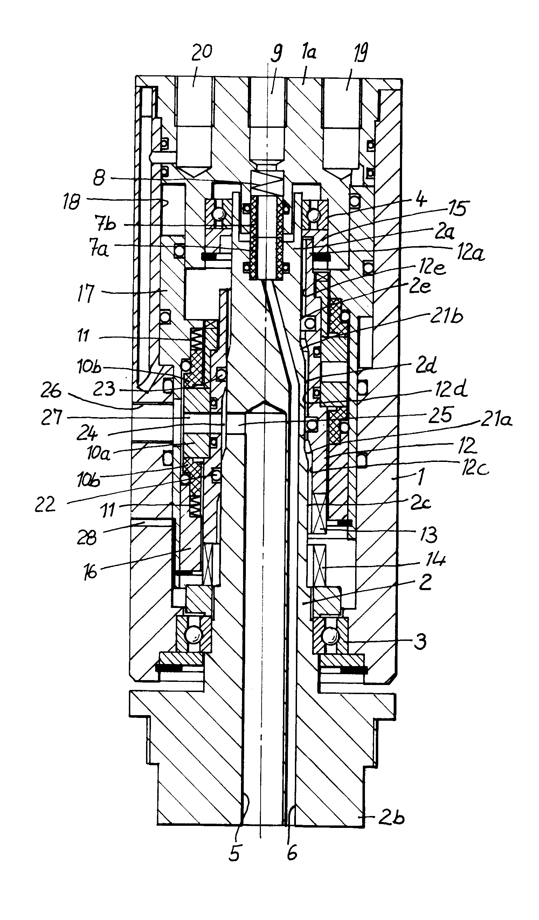

Die Erfindung wird in folgendem, anhand eines in der Zeichnung dargestellten Ausführungsbeispieles, näher erläutert.

Die Zeichnung zeigt einen Axialschnitt der Drehdurchführung, links in gekuppeltem Zustand der zweiten Gleitringdichtungsanordnung bei Hindurchleitung von zwei verschiedenen Fluids, rechts im entkuppelten Zustand.

In einem feststehenden Gehäuse 1, 1a ist die Hohlwelle 2 mittels der Lager 3, 4 drehbar und axial unverschiebbar gelagert. Die Hohlwelle 2 weist einen zentralen Durchflußkanal 5 auf, in den das eine Ende einer nicht dargestellten Zugstange einer in einer Werkzeugmaschinenspindel angeordneten Spanneinrichtung angreifen kann. Die Hohlwelle 2 weist einen parallel zum zentralen Durchflußkanal 5 verlaufenden zweiten Durchflußkanal 6 auf. Das äußere Ende 2b der Hohlwelle 2 kann mit der sogenannten Löseeinheit der Spanneinrichtung verbunden sein, wobei dieser Löseeinheit über den Durchflußkanal 6 Hydrauliköl unter hohem Druck während des Stillstandes der Werkzeugmaschinenspindel zugeführt werden soll.

An dem inneren Ende 2a der Hohlwelle 2 ist der Gleitring 7a einer ersten Gleitringdichtungsanordnung 7a, 7b vorgesehen, an welchen der im Gehäusedeckel 1a verschiebbar gelagerte Gleitring 7b mittels einer Feder 8 ständig angedrückt wird. Der Gehäusedeckel 1a weist einen ersten Zuflußkanal 9 für ein erstes Fluid, nämlich Hydrauliköl, auf.

Zur Zuführung eines zweiten Fluids, z.B. Kühlschmiermittel oder Luft, zu der Hohlwelle 2, ist eine zweite, aus den Gleitringen 10a, 10b und den Federn 11 bestehende Gleitringdichtungsanordnung vorgesehen. Der Gleitring 10a ist drehfest auf einer inneren Büchse 12 angeordnet, welche die Hohlwelle 2 konzentrisch umgibt. Die innere Büchse 12 weist an ihrem, dem Hohlwellenende 2a abgewandten Ende, mehrere Kupplungszähne 13 auf, die mit entsprechenden, drehfest mit der Hohlwelle 2 verbundenen Kupplungszähnen 14 durch axiale Verschiebung der inneren Büchse 12 kuppelbar sind. In der Zeichnung ist die innere Büchse 12 links in eingekuppeltem Zustand, rechts in entkuppeltem Zustand dargestellt.

Vorzugsweise ist das dem Gehäusedeckel 1a zugekehrte Ende 12a der inneren Büchse so ausgebildet, daß es in entkuppeltem Zustand derselben in einen im Gehäusedeckel 1a vorgesehenen Haltering 15 eingreift. Hierdurch ist das Ende 12a bei entkuppelter Büchse 12 gegen radiale Verlagerung gesichert.

Die beiden, in jedem Betriebszustand ruhenden Gleitringe 10b der zweiten Gleitringdichtungsanordnung sind in einer die innere Büchse 12 konzentrisch umgebenden äußeren Büchse 16 angeordnet und werden durch die Federn 11 ständig an den Gleitring 10a angedrückt. Die äußere Büchse 16 ist ebenfalls axial verschiebbar und weist einen Ringkolben 17 auf, welcher in dem Zylinderraum 18 des Gehäuses 1 verschiebbar ist. Über die Zuflußbohrungen 19, 20 im Gehäusedeckel 1a kann der Zylinderraum 18 beidseitig des Ringkolbens 17 abwechselnd mit Druck beaufschlagt werden.

Die Hohlwelle 2 weist im Verschiebebereich der inneren Büchse 12 drei zum Hohlwellenende 2a hin im Durchmesser stufenweise verjüngte Abschnitte 2a, 2d und 2e auf. Zwischen diesen drei Abschnitten 2c, 2d und 2e sind jeweils konische Übergänge 21a, 21b vorgesehen. Die Innenwand der inneren Büchse weist drei im Durchmesser ebenfalls stufenweise verjüngte Abschnitte 12c, 12d und 12e auf, die in ihren Durchmessern den Abschnitten 2c, 2d und 2e entsprechen. Die innere Büchse 12 weist ferner am Anfang des zweiten Abschnittes 12d und des dritten Abschnittes 12e je einen O-Ring 22, 23 auf. Jeder dieser O-Ringe 22, 23 liegt aber nur in gekuppeltem Zustand der inneren Büchse 12, wie aus der Zeichnung, links, ersichtlich ist, an dem im Durchmesser entsprechenden Abschnitt 2c bzw. 2d der Hohlwelle an, während in entkuppeltem Zustand, wie es in der Zeichnung, rechts, dargestellt ist, zwischen den O-Ringen 22, 23 und den Abschnitten 2d bzw. 2e Luft vorhanden ist. In gekuppeltem Zustand der inneren Büchse 12 dichten die beiden O-Ringe 22, 23 einen Ringraum 24 ab, der mit einer Radialbohrung 25 in der Hohlwelle 2 in Verbindung steht. Das Gehäuse 1 ist mit einem zweiten Zuflußkanal 26 versehen, der zur Zuführung von Kühlschmiermittel oder Luft dient. Dieser Zuflußkanal 26 liegt im Bereich des gekuppelten Gleitringes 10a, der seinerseits mit einer Radialbohrung 27 versehen ist. Etwaige Leckage kann an der Leckagebohrung 28 des Gehäuses austreten.

Wenn der Werkzeugmaschinenspindel kein Kühlschmiermittel zugeführt werden soll, dann befinden sich die Büchsen 12, 16 mit den an ihnen angeordneten Gleitringen 10a, 10b in der in der Zeichnung, rechts, dargestellten entkuppelten Stellung. Zwischen der Hohlwelle 2 einerseits und der inneren Büchse 12 sowie deren O-Ringen 22, 23 andererseits, besteht keinerlei Kontakt. Während die Hohlwelle 2 rotiert ruht die Büchse 12 und der von ihr getragene Gleitring 10a. Es findet infolgedessen auch keine Relativbewegung zwischen den Gleitringen 10a und 10b statt, und demgemäß können hier auch kein Verschleiß und keine Erwärmung der Gleitringe stattfinden.

Wenn jedoch einem an der Werkzeugmaschinenspindel angeordneten Werkzeug Kühlschmiermittel zugeführt werden soll, dann wird zunächst der oberhalb des Ringkolbens 17 befindliche Zylinderraum über die Zuflußbohrung 19 mit einem Druckmittel beaufschlagt. Es kann sich hierbei um Luft handeln, gegebenenfalls aber auch um Kühlschmiermittel, sofern in einer nicht dargestellten Zuführleitung zum Zuflußkanal 26 ein federbelastetes Ventil angeordnet ist, welches zunächst bei geringerem Druck des Kühlschmiermittels nicht öffnet. Durch Druckbeaufschlagung des über dem Ringkolben 17 liegenden Zylinderraumes wird der Ringkolben 17 und die mit ihm verbundene äußere Büchse 16 nach unten geschoben. Über die Gleitringe 10b und 10a wird auch die innere Büchse 12 mitgenommen und deren Kupplungszähne 13 gelangen in Eingriff mit den Kupplungszähnen 14 der Hohlwelle 2. Gleichzeitig legen sich die O-Ringe 22, 23 dichtend an die entsprechenden Abschnitte 2c und 2d der Hohlwelle an. Wenn nun die Hohlwelle 2 rotiert, dann nimmt sie über die Kupplungszähne 13, 14 auch die innere Büchse 12 mit und der fest mit der inneren Büchse 12 verbundene Gleitring 10a rotiert dann zusammen mit der Hohlwelle. Die äußere Büchse 16 ist jedoch gegen Drehung gesichert und die von ihr getragenen Gleitringe 10b sind drehfest in der äußeren Büchse 16 gehalten. Der Durchflußbohrung 5 kann nunmehr über den Zuflußkanal 26, die Radialbohrung 27 im Gleitring 10a und die Radialbohrung 25 Kühlschmiermittel, oder beim Werkzeugwechsel auch Druckluft zum Ausblasen, zugeführt werden.

Wenn ohne Kühlschmiermittel eine Trockenbearbeitung durchgeführt werden soll, dann wird vorher durch Zuführung eines Druckmittels über die Zuflußbohrung 20 der unter dem Ringkolben 17 liegende Teil des Zylinderraumes 18 mit Druck beaufschlagt, wodurch die äußere Büchse 16 und auch die innere Büchse 12 in die in der Zeichnung, rechts, dargestellte entkuppelte Stellung gebracht werden.

Gegebenenfalls wäre es auch möglich, den Ringkolben 17 nur einseitig mit Druckmittel zu beaufschlagen und die Rückführung des Ringkolbens 17 in die entkuppelte Stellung durch Federkraft zu bewirken.

Ferner können in kinematischer Umkehr die O-Ringe 22, 23 nicht in der Büchse 12 sondern an der Hohlwelle 2, an deren Abschnitten 2c und 2d, angeordnet sein.

## Patentansprüche

1. Drehdurchführung für zwei unterschiedliche Fluide, insbesondere für Werkzeugmaschinen, mit einem feststehenden Gehäuse, mit einer darin drehbar und axial unverschiebbar gelagerten, einen zentralen Durchflußkanal für das erste Fluid und mindestens einen hierzu parallelen zweiten Durchflußkanal für das zweite Fluid aufweisenden Hohlwelle, mit zwei im Gehäuse vorgesehenen, getrennten Zuflußkanälen für die beiden Fluide und mit zwei zwischen diesen und der Hohlwelle vorgesehenen, koaxial zur Drehachse angeordneten Gleitringdichtungsanordnungen, über welche die Fluide den Durchgangskanälen getrennt zuführbar sind, wobei die erste Gleitringdichtungsanordnung zentral zwischen dem im Gehäuse liegenden (inneren) Ende der Hohlwelle und einem den ersten Zuflußkanal aufweisenden Gehäuseteil (Gehäusedeckel) angeordnet ist, während die zweite Gleitringdichtungsanordnung die Hohlwelle konzentrisch umschließt und einen zusammen mit der Hohlwelle drehbaren, mit mindestens einem radialen Durchlaß versehenen Gleitring, sowie zwei an dessen beiden Stirnseiten unter Federdruck ständig anliegende, gegenüber dem Gehäuse ruhende Gleitringe umfaßt, und wobei die Hohlwelle mindestens eine Radialbohrung aufweist, die einen der Durchflußkanäle mit dem drehbaren Gleitring verbindet, **dadurch gekennzeichnet**, daß die zweite Gleitringdichtungsanordnung (10a, 10b, 11) gegenüber dem Gehäuse (1) und der Hohlwelle (2) axial verschiebbar ist, daß hierbei der drehbare Gleitring (10a) drehfest auf einer die Hohlwelle (2) konzentrisch umgebenden, mit dieser kuppelbaren und axial verschiebbaren inneren Büchse (12) angeordnet ist, daß die beiden ruhenden Gleitringe (10b) in einer die innere Büchse (12) konzentrisch umgebenden, axial verschiebbaren äußeren Büchse (16) angeordnet sind, die einen in einem Zylinderraum (18) des Gehäuses (1) verschiebbaren Ringkolben (17) aufweist, und daß die Hohlwelle (2) im Verschiebebereich der inneren Büchse (12) drei zum Hohlwellenende (2a) hin im Durchmesser stufenweise verjüngte Abschnitte (2c, 2d, 2e) und die Innenwand der inneren Büchse (12) drei im Durchmesser entsprechend stufenweise verjüngte Abschnitte (12c, 12d, 12e) aufweisen, und daß die innere Büchse (12) am Anfang des zweiten und des dritten Abschnittes (12d, 12e) O-Ringe (22, 23) aufweist, die nur in gekuppeltem Zustand der inneren Büchse (12) an den im Durchmesser entsprechenden Abschnitten (2c, 2d) der Hohlwelle (2) anliegen und zwischen sich einen Ringraum (24) abdichten, der mit der Radialbohrung (25) der Hohlwelle (2) in Verbindung steht.

2. Drehdurchführung nach Anspruch 1, **dadurch gekennzeichnet,** daß zwischen den drei Abschnitten (2c, 2d, 2e; 12c, 12d, 12e) von Hohlwelle (2) und innerer Büchse (12) jeweils konische Übergänge (21a, 21b) vorgesehen sind.

3. Drehdurchführung nach Anspruch 1 oder 2, **dadurch gekennzeichnet**, daß die innere Büchse (12) an ihrem dem Hohlwellenende (2a) abgewandten Ende Kupplungszähne (13) aufweist, die mit entsprechenden, drehfest mit der Hohlwelle (2) verbundenen Kupplungszähnen (14) durch axiale Verschiebung der inneren Büchse (12) kuppelbar sind.

4. Drehdurchführung nach Anspruch 1, **dadurch gekennzeichnet**, daß das dem Gehäusedekkel (1a) zugekehrte Ende (12a) der inneren Büchse (12) in entkuppeltem Zustand derselben in einen am Gehäusedeckel (1a) vorgesehenen Haltering (15) eingreift.

5. Drehdurchführung nach Anspruch 1, **dadurch gekennzeichnet**, daß der Zylinderraum (18) des Gehäuses (1) beidseitig des Ringkolbens (17) mit Druck beaufschlagbar ist.